# EUROPEAN PATENT APPLICATION

(11) **EP 3 336 816 A1**
(43) Date of publication of application: **20.06.2018**
(21) Application number: 16835532.9
(22) Date of filing: 10.08.2016
(51) Int. Cl.: G08B 17/00, C08F 20/56

(54) **SYSTEM FOR SIGNALLING A PRE-FIRE SITUATION**

(30) Priority: 10.08.2015 RU 2015133304
(71) Applicant: Limited Liability Company "Termoelektrica", Moscow 143026 (RU)
(72) Inventor: LESIV, Aleksey Valeryevich, Dolgoprudny 141707 (RU)
(74) Representative: Chimini, Francesco
(86) International application number: PCT/RU2016/000531
(87) International publication number: WO 2017/026922

(57) **Abstract**

The invention relates to the means for controlling pre-fire situations resulting from local overheating of electrical equipment and is intended to prevent fires caused by faults in electrical wiring, in particular faults in wiring devices. The system consists of a gas sensor connected to a recorder that is connected to the signal delivery system and the polymeric crosslinked composite material applied to heat-prone areas of an electrical circuit having an opening temperature in the range of 80-200 °C and containing a light-boiling substance within it that is easily detected by the above-mentioned gas sensor. The technical result of the claimed solution is to increase the probability of detecting a pre-fire situation at an early stage.

## Description

### Field of the invention

The present invention refers to the means for control of pre-fire situations arising as a result of local overheating of electrical equipment and can be used to identify electrical equipment malfunction in the early stages and prevention of fire caused by malfunction of the wiring.

### Background of the invention

To date, more than 20% of all fires occur due to violations in the operation of the electrical equipment and electrical devices. Most often, ignition occurs in the area of electrical contacts.

One of the most effective methods of fire fighting is the recognition of pre-fire situations. Many systems for detecting such situations are based on monitoring the composition of the gaseous medium, in particular on the analysis of the content of gases released at the initial stage of combustion (smoldering).

Hydrogen (H₂) is the main component of the released gases at the stage of smoldering as a result of the pyrolysis of materials used in construction, such as wood, textiles, synthetic materials. At the initial stage of the fire, during the smoldering process, the hydrogen concentration is 0.001-0.002%. Further the content of aromatic hydrocarbons is increasing against the background of the under-oxidized carbon presence in the form of carbon monoxide (CO) - 0.002-0.008% (vol.% in air) [1].

Experiments have demonstrated that the threshold for early fire alarm system in the atmospheric air under normal conditions should be at a level of 0.002% for most gases, including hydrogen and carbon monoxide. At the same time, it is desirable that the system performance be at least 10 s. This conclusion can be considered as a fundamental for the development of a number of warning fire gaseous alarms [1].

However, as indicated above, the concentrations of the gaseous thermal decomposition products formed in the smoldering stage are very small. Because of this, all systems for detecting pre-fire situations, based on the detection of such products in the air, have a number of common shortcomings:

Use of such systems is possible only on objects with a low degree of ventilation.

To detect low concentrations of CO and H₂, high-precision selective methods shall be used. At the same time, the gas sensors can not provide the required selectivity, and devices based on spectrometric measurements have a high cost and are difficult to maintain.

Since the appearance of such small concentrations of combustion products in the air can occur not only as a result of ignition, an increase in the sensitivity of detection systems leads to an increase in the number of false responses. So, for example, immediately after the appearance of the flame, the concentration of carbon dioxide (CO₂) increases to 0.1%, which on the one hand corresponds to the combustion of 40-50 g of wood or paper in a closed room with a volume of 60 m³, on the other hand it is equivalent to 10 smoked cigarettes. Such level of CO₂ is also achieved as a result of the presence of two people in a room for 1 hour [1].

Since intensive separation of thermal decomposition products begins only at high temperatures (> 250 °C), i.e. shortly before the appearance of a flame, such systems do not allow identifying dangerous situations at the early stages.

Thus, a method is known for diagnosing a pre-fire situation and preventing a fire, including measuring the intensity of monochromatic radiation emitted by a pulsed source at the frequency of its absorption by thermal destruction products of the identified materials, and generating a control signal for fire alarm when the concentrations of their admissible values are exceeded [2].

The disadvantages of the known method include its low reliability, high probability of false responses, as well as insufficiently early detection of fires, which is caused by the development of a control signal without taking into account the rate of increase in concentration and the assessment of a fire hazard situation with respect to the concentrations of insufficient quantities of controlled gas components.

A method and a device for detecting a pre-fire situation based on the infrared spectroscopy are known. The device comprises an optically coupled source and a radiation receiver coupled to the first amplifier and a processing pattern that includes two radiation receivers, the second and the third amplifier which, together with the first amplifier, are connected to an analog-to-digital converter through the respective blocks of admissible concentrations of fire hazardous components, the output of the converter is connected through the microprocessor and digital-to-analog converter to the alarm unit, while the second output of the microprocessor is connected to the monitor. It is designed to detect the products of thermal decomposition of various organic materials formed under the influence of a non-standard heat source, which can arise, in particular, as a result of sparking or short-circuiting in the electrical commutation equipment. [3].

The disadvantage of the known technical solution is that it reacts to the appearance of gases and smoke accompanying the already started ignition, i.e. it gives a signal directly at the moment of ignition start or after the start of it.

Another known method for diagnosing a pre-fire situation and prevention of a fire, including measuring of informative parameters by a sensor unit: concentrations of gaseous thermodestruction products in air, namely CO, CO₂, NOₓ HCl, oxidants, fume, as well as temperature, measurement of the signal lag time from each of the sensors using an ignition simulator, determining the derivatives values of the time dependence on the information parameters measured by each sensor , the generation of a control signal for fire alarm start and the possible activation of fire extinguishing means and switching off the power supply as a result of a fire risk analysis based on measured by, at least, two sensors of informative parameters, characterized by the fact that in addition as informative parameters, measure concentrations of H₂, CH₄, NH₃, O₂, Cl₂, H₂S, SO₂, HCOOH, C₆H₅OH, reducing agents in the time interval 0.1 - 60 s they determine for each dependence of information parameters on time, at least one value of the derivative, determine the modified value of each of the measured informative parameters as a value equal to the product of the derivative value per time corresponding to each lag sensor and produce the control signal when the permissible values are exceeded by the modified values of the informative parameters determined from the measurements of at least two sensors, the time delay of the signal being periodically measured as the value of the time interval between the switching times of the fire simulator and the maximum value of the signal from the sensor [4].

The known method is applicable in wide use to a limited extent because of the complexity of measuring the concentrations of gaseous thermodestruction products in air, the inertia of the measurements and the need for expensive equipment.

A device for monitoring the parameters of a gaseous medium is known, containing gas sensors, an analog measuring part, a microprocessor module for controlling the operating modes of the sensors, the primary processing of measurement data and their storage, as well as the power supply circuit of the sensor and the device as a whole, characterized by the fact that the electronic circuit of the device integrates software and hardware interface for data transmission and commands over wireless networks, and the algorithm for measuring and transmitting data is optimized for the purpose of an autonomous operation the facility without replacing the battery during the calibration interval. In this case, the device can be used as a pre-alarm detector to control the chemical composition of air, in particular, to determine the content of CO and H₂ [5].

The disadvantage of the known device is the possibility of false responses in the detection of pre-fire situations, as well as low operational reliability during the maintenance period due to high sensitivity to interference.

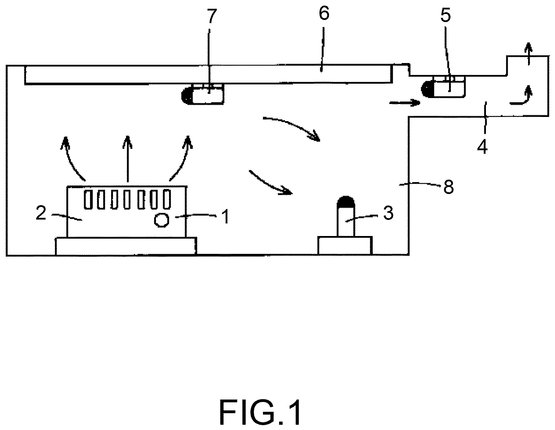

A somewhat different approach to the recognition of pre-fire situations is described in the patent document [6], which discloses a device for the early detection of overheating in hard-to-reach points of electrical and mechanical equipment, which is based on the use of an odorant **1** sealed in a hot-melt composition installed near the heat generating part of the device **2**, for which overheating is controlled. An odor sensor **3** is installed downstream from the gas flow from this odorant (see Fig. 1). As an odorant **1**, microcapsules of a hot melt composition containing flavoring agents can be used. Also, flavors mixed with the wax or other fatty acids can be applied. This device is considered by the inventors as the closest analog of the prior art (prototype).

The drawback of the solution known from [6] is the use of hot melt polymers. When the heat-generating part is heated above the softening or melting temperature of the hot-melt polymer, it may be detached or drained to a part of the electrical equipment, for example, to the insulation of the wiring, the violation of which can lead to a short circuit. In addition, the description of the patent document [6] indicates that the odorant emission from the proposed polymeric compositions occurs due to the melting of the material. This circumstance can be accompanied by unfavorable consequences for the electrical equipment, such as foaming and spraying of the polymeric mass with the evolved gas. Insertion of hot foamed mass, polymer droplets or polymer melt flowing off the sticker to the adjacent contacts, electrical equipment, blowers, sensors, can lead to malfunction or even ignition.

In addition, for the registration of pre-fire situations one of the most significant criteria is the response speed of the system as a whole. For these purposes, the gas shall be released in a significant amount when the critical temperature is reached and quickly distributed in volume. Pore opening resulting from the melting of the polymer in [6] may be accompanied by the transition of the odorant to a hot melt composition (eg, dissolution) or to create a foam layer. In this case, the evaporation of gas from the surface will proceed slowly and will not lead to a one-time transition of the main amount of gas enclosed in the product into the gas phase.

### Description of the invention

The object of the invention is to increase the probability of detecting a pre-fire situation at an early stage and to minimize the number of false responses.

The pre-fire situation alarm system consists of a gas sensor connected to a recorder that is connected to the signal system and applied to the heat-prone sections of the electrical circuit polymeric composite material having an opening temperature in the range of 80-200 ° C and containing a continuous phase that is formed by a thermosetting polymer, and a light-boiling substance enclosed within a continuous phase, which is easily detected by the aforementioned gas sensor.

When heating the specified polymeric composite material to the opening temperature, a large excess pressure of the gas inside the capsule or pores leads to explosive opening (rupture) of the composite material. As a result, the gas almost instantly leaves the material, is not occluded on it and reaches the sensor in the minimum time.

Thus, the technical result of the claimed solution is provided, namely, increasing the probability of detecting a pre-fire situation at an early stage.

### BRIEF DESCRIPTION OF THE DRAWINGS

Fig. 1 shows a known device for early detection of overheating in hard-to-reach points of electrical and mechanical equipment (according to the patent document [6]).
Fig. 2 shows the results of a thermogravimetric analysis of the microencapsulated composite material of the invention prepared according to Example 1.
Fig. 3 schematically shows a general view of the alarm device.
Fig. 4 shows a general view of the product made of a composite material to be mounted on current-carrying parts.
Fig. 5 shows the time dependences of the gas concentration (green curve) and the temperature of the heating plate (red curve) in the event of a system response when the composite polymeric material is instantly heated in a large-volume cabinet.
Fig. 6 shows the time dependences of the gas concentration (green curve) and the temperature of the heating plate (red curve) in the event of a system response when the composite polymeric material is smoothly heated in a large cabinet.
Fig. 7 shows the time dependences of the gas concentration (blue curve) and the temperature of the heating plate (red curve) in the event of a system response when the composite polymeric material is instantly heated in an open small volume cabinet.
Fig. 8 shows the time dependences of the gas concentration (blue curve) and the temperature of the heating plate (red curve) in the event of repeated response of the system.

### Detailed description of the invention

The claimed system is designed for early detection of pre-fire situations when heating of wires or electrical contacts exceeds the permissible operating parameters (> 100 °C), but does not yet reach the level at which thermal destruction of materials capable of ignition occurs (> 250 ° C).

As thermally activated (in this case thermal activation is understood as the property of explosive opening of the material when heated to a certain temperature), the following materials containing thermosetting polymers can be used for polymeric composite materials: microencapsulated materials or porous materials with closed-type pores containing fillers.

The light boiling substances contained within the polymeric composite material may include but are not limited to halocarbons, for example 1,1,1,3,3-pentafluorobutane (chladone 365), 1,1,1,2,2,4,5,5, 5-nonafluoro-4-(trifluoromethyl) pentan-3-one (Novec 1230). These compounds belong to the 4th danger class, i.e. are not hazardous to humans. They are not present in indoor air under normal circumstances, so they can be detected at minimal concentrations, without fear of false responses.

An important advantage of fluorine-containing halocarbons comparing to the odorants or fragrances used in the patent document [6] is that they do not have a pronounced odor easily perceived by a person, and belong to low-toxic compounds. This circumstance makes it possible to use the proposed system in the vicinity of a mass congestion of people, for example, at transport facilities and even in rooms where people can stay permanently. Emission of 1,1,1,3,3-pentafluorobutane (Chladone 365), 1,1,1,2,2,4,5,5,5-nonafluoro-4-(trifluoromethyl) pentan-3-one (Novec 1230) instead of odorants will not lead to panic and will not affect the excess of MRL inside the protected object.

In addition, freons, unlike flavoring agents, can not be present in the air during normal operation, which significantly reduces the risk of false responses. Finally, fluorine-containing hydrogen halides are a class of substances that can be selectively detected by the sensor at ultralow concentrations (less than 0.001 ppm) [7].

As a light-boiling substance, alternatively or additionally, odorants, such as low-molecular-weight mercaptans, dialkyl sulfides, dialkyl disulfides or their solutions, may also be used. The advantage of this solution is that in this case, the precise location of overheating is possible to determine through the human sense of smell.

Odorant may be methyl mercaptan, ethyl mercaptan, n-propyl mercaptan, isopropilmerkaptan, n-butyl, sec-butyl mercaptan, isobutilmerkaptan, tert-butyl mercaptan, amilmerkaptan, isoamilmercaptan, hexylmercaptan, dimethyl, diethyl, diallyl disulfide, allilmetilsulfid, methyl ethyl, diisopropilsulfide, dimethyl disulfide, diethyl disulfide, dipyridyl disulfide , diisopropyldisulfide.

In some embodiments, the low-boiling substance contained within the polymeric composite material is an odorant in admixture with solvents. The use of solvents allows achieving lower temperatures and narrower temperature ranges of the opening of the composite material while maintaining its mechanical characteristics.

Odorant solvents include, but are not limited to, hydrofluorochlorocarbons, hydrofluorocarbons, fluorocarbons, chlorocarbons, chlorofluorocarbons, perfluoro (ethylisopropyl ketone), alkanes, ethers, or mixtures thereof.

In some embodiments of the invention, the polymeric composite material is a microcapsule with a core of a light-boiling substance bound in a binder. Microcapsules have a two-layer polymeric shell, the inner layer of which consists of gelatin or its derivative, and the outer reinforcing layer is made of carbamide resins, resorcinol resins, melamine resins, phenolic resins or polyvinyl acetate resins. The average outer diameter of the microcapsules is 1-5000 µm, the average thickness of the polymer shell is 0.01-1 µm. The polymeric binder is an acrylic resin and / or epoxy resin and / or polyamide and / or polyvinyl acetate and / or polyester and / or polyurea and / or polyvinyl alcohol and / or polyurethane.

In other embodiments of the invention, the polymeric composite material is a polymer gel formed by crosslinked polymer particles swollen in a solution of a light boiling substance placed in a polymeric matrix. The crosslinked polymer is a polyacrylamide crosslinked with N, N'-methylenebisacrylamide, polyvinyl alcohol crosslinked with epichlorohydrin or polyvinyl alcohol crosslinked with glutaric aldehyde. The average particle size of the crosslinked polymer is 50-500 µm. The polymeric matrix is polyorganosiloxanes, polyvinyl acetate, epoxy resins.

In other embodiments of the invention, the polymeric composite material is a silica gel or zeolite particles with an odorant occluded thereon, placed in a polymeric matrix. The average particle size is preferably 10-2000 µm. The polymeric matrix included in the composite material includes, but is not limited to, polyurethane, polyurea.

In other embodiments, the polymeric composite material is porous polymer particles with closed-type pores or channels filled with an odorant or odorant solution placed in a polymeric matrix. The average particle size is preferably 200-5000 µm. The average pore diameter is preferably 10-100 µm. As a porous polymer, polystyrene, polyorganosiloxanes, polyurethane, polyurea are offered. The polymeric matrix included in the composite material includes, but is not limited to, polyvinyl acetate, epoxy resins.

The use of thermosetting (in particular crosslinked) polymers avoids the disadvantages of the hot melt polymeric compositions mentioned in the document [6], such as foaming of the material during gas emission, the flow of material to electrical equipment at high temperatures, and slow release of gas.

When thermosetting cross-linked polymers are used, pores are opened by breaking the material with superheated liquefied gas under a large excess pressure. This leads to an "explosive" release of gas from the material, thereby achieving a simultaneous achievement of a high concentration of the signal gas and the fastest possible response of the system. The high rate of the signal substance release favorably distinguishes the use of crosslinked thermosetting polymers from the hot-melt materials specified in the patent document [6]. For hot melt materials, the rate of odorant output is limited by its diffusion rate through the polymer, as well as by other processes that can accompany the melting of the material, for example by foaming.

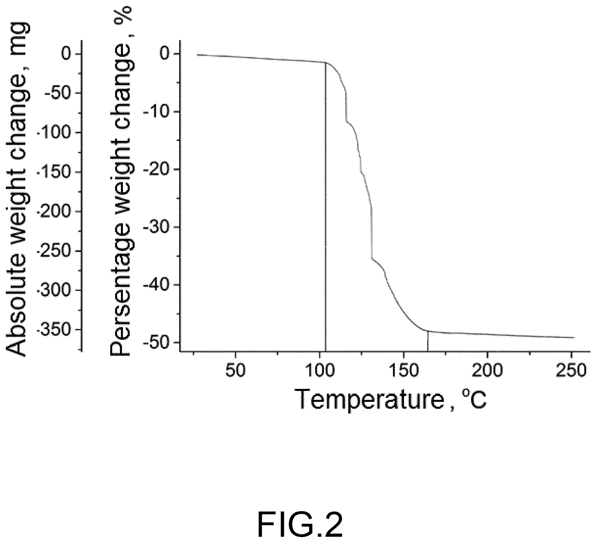

Another advantage of the crosslinked polymers is that the opening of pores in the proposed thermosetting polymers occurs not in a narrow temperature range, corresponding to the melting of the polymer (transition into a viscous state), but in a wide range. In crosslinked polymers, the opening (explosive destruction) of the shell occurs when the gas within the pore reaches the pressure of the corresponding shell strength. Because of the specific features of such polymers synthesis, the pores differ from each other both in size and thickness of the shell, and their opening occurs at different pressures and temperatures. The temperature range in which the explosive opening of the thermosetting composite material occurs is 103-163 ° C, as illustrated by the thermogravimetric curve shown in Fig. 2.

The latter circumstance causes one more important difference of the proposed invention. Since the opening of the polymer occurs over a wide range of temperatures and the destruction of a part of the pores at a lower opening temperature does not disrupt the integrity of other pores, the system can response repeatedly. In other words, if the proposed polymer composite material is heated to the opening temperature in a predetermined range of opening temperatures, then cooled to a temperature lower than the specified opening temperature range, for example to a temperature corresponding to the permissible performance parameters of the equipment, and then reheated to the opening temperature in a predetermined a range of opening temperatures higher than the previous opening temperature, then upon repeated heating, there will also be sufficient gas release and system response to form the signal (see. Example 5).

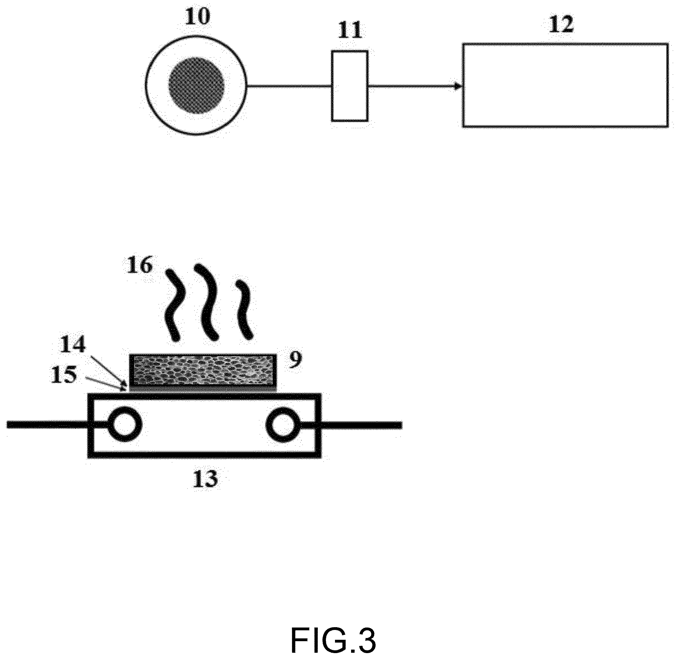

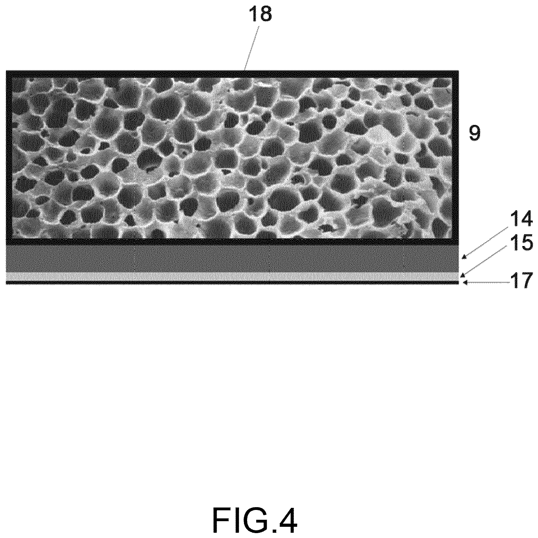

The essence of the invention is illustrated by graphical materials, where Fig. 3 schematically shows a general view of the alarm device, and Fig. 4 shows a general view of a product made of a composite material to be mounted on current-carrying parts.

The device for pre-fire situation alarm, shown in Fig. 3 consists of a plate **9** made of a cross-linked polymeric composite material containing a light-boiling substance inside the cavities **18,** gas sensor **10** connected via a recorder **11** to a signal delivery system **12.** The plate **9** is adhered to the base **14,** which has an adhesive layer **15** on the back side, by means of which the plate **9** is fixed to the current-carrying part **13.** Prior to installation on the wiring product, the adhesive layer **15** is closed with an easily detachable protective film **17.** When heated above a certain temperature, the plate **9** emits gas **16** detected by the gas sensor **10.**

Fig. 4 shows a plate **9** made of a cross-linked polymeric composite material containing a light-boiling substance inside the cavities **18.** Prior to installation on the wiring product, the adhesive layer **15** is closed with an easily detachable protective film **17.**

The use of the described polymeric materials makes it possible to obtain hermetic shells, allowing to store inside the low-boiling matter for a long time without significant losses. When a certain temperature is reached, the pressure of the filler-the light-boiling substance within the continuous phase of the polymer increases, which results in the rupture of the composite material and the release of gaseous products detected by the sensor into the atmosphere. The change in the composition of the filler and the polymer matrix makes it possible to vary the temperature of the opening of the material.

Since the gaseous substances released by heating the composite material are not present under normal conditions in the atmosphere, and also because they are released at relatively low temperatures (before the thermal decomposition of the materials from which wires and wiring devices are made), the invention allows to detect potentially fire hazardous situations long before the appearance of smoke or open fire.

Thus, the proposed invention makes it possible to detect pre-fire situations much earlier than existing analogues. The proposed system is designed for multiple response, since to detect overheating only a small fraction emission contained in the composite material of a light boiling substance is enough, so after cooling of the composite material below the temperature in the interval of the opening temperature, sufficient light boiling material remains for repeated responses in the case of reheating up to temperatures in the interval of the opening temperature. Due to the direct contact of the polymeric composite material with the heating section of the electrical circuit a high response speed of the device is ensured.

### Example 1.

Method of polymeric composite material manufacturing.

Freon 365 was washed with sodium thiosulfate solution, dried with phosphorus pentoxide and distilled. 720 g of polyisocyanate was mixed with 9 kg of freon and vigorously stirred 2 times for 2 minutes with a periodicity of 10 minutes. The resulting mixture was aged for 30 minutes and filtered through cotton wool. The filtrate was placed in the apparatus, 101 of a 1% solution of polyvinyl alcohol in water was added. The resulting mixture was stirred until a stable emulsion was obtained, and then a 1% solution of polyethylene polyamine in 10 liters of water was added to it for 3 hours. The mixture was stirred for 7 days at room temperature.

The resulting microcapsules were washed 5 times with water until neutral reaction, mixed with PVA in a 1: 1 ratio and applied by a thin layer on a silicone substrate. After the first drying, another layer of PVA capsules was applied and so on until a 1.25 mm thick sheet was obtained.

At the end of the described procedure, 10.7 kg of plastic material were obtained.

### Example 2.

Response of the system with instant heating in a large volume cabinet.

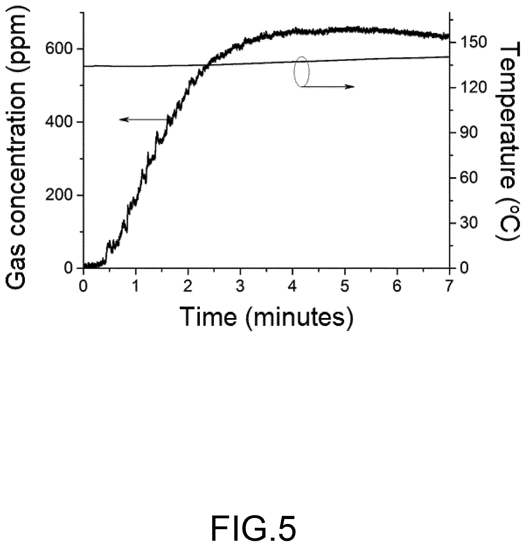

Testing procedure. The article made of the polymeric composite material with the weight of 1.5 g and 1.25 mm thickness, manufactured according to Example 1, was glued to a heating plate, the temperature of which was maintained in the range of 130 to 135 ° C. The plate was placed in the geometric center of the cabinet with a volume of 1 m³ (the height of the cabinet was 2.0 m, the width was 1.0 m and the depth was 0.5 m). The temperature of the plate was controlled by a thermocouple fixed between the product of the composite polymeric material and the heating plate. The concentration of the signal gas released by the composite polymeric material was registered with a semiconductor gas sensor SP-42A-00 (manufactured by FIS Inc.) located at the distance of 1 cm from the geometric center of the upper edge of the cabinet. Fig. 5 shows the time dependences of the gas concentration (green curve) and the temperature of the heating plate (red curve).

As it can be seen from Fig. 5, the system response and overheating recording by means of the gas sensor takes place in less than 1 minute.

### Example 3.

Response of the system with smooth heating in a large volume cabinet.

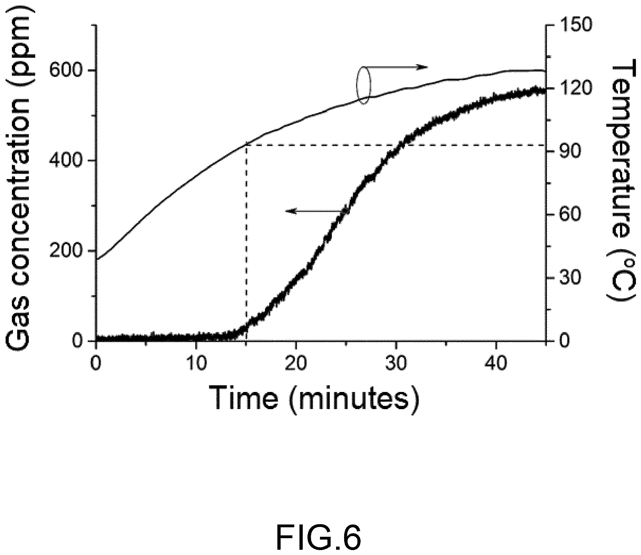

Testing procedure. The article made of the polymer composite material with the weight of 1.5 g and 1.25 mm thickness, manufactured according to Example 1, was glued to a heating plate under normal conditions. The plate was placed in the center of the cabinet with a volume of 1 m³ (the height of the cabinet was 2.0 m, the width was 1.0 m and the depth was 0.5 m). The temperature of the plate gradually increased to 135 ° C, which was controlled by a thermocouple fixed between the composite polymeric material and the heating plate. The concentration of the signal gas released by the composite polymeric material was registered with a semiconductor gas sensor SP-42A-00 (manufactured by FIS Inc.) located at the distance of 1 cm from the geometric center of the upper edge of the cabinet. Fig. 6 shows the time dependences of the gas concentration (green curve) and the temperature of the heating plate (red curve).

As it can be seen from Fig. 6, the system is triggered when the plate reaches a temperature of 93 °C.

### Example 4.

Response of the system in an open small volume cabinet.

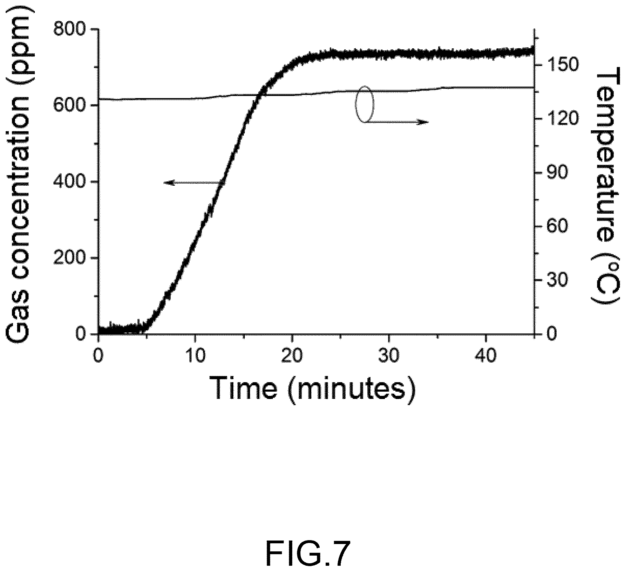

Testing procedure. The article made of the polymeric composite material with the weight of 0.5 g and 1.25 mm thickness, manufactured according to Example 1, was glued to a heating plate, the temperature of which was maintained in the range of 130 to 135 ° C. The plate was placed at a distance of 1 cm from the geometric center of the lower edge of the cabinet (see Fig. 3a), having a volume equal to 50 liters (cabinet height was 70 cm, width - 40 cm, and depth - 18 cm). The door of the cabinet (front face) in the experiment was left open. The temperature of the plate was controlled by a thermocouple fixed between the product of the composite polymeric material and the heating plate. The concentration of the signal gas released by the composite polymeric material was registered with a semiconductor gas sensor SP-42A-00 (manufactured by FIS Inc.) located at the distance of 1 cm from the geometric center of the upper edge of the cabinet. Fig. 7 shows the time dependences of the gas concentration (blue curve) and the temperature of the heating plate (red curve).

In the given example (see Fig. 7) the system was triggered almost immediately after the product was applied to the heater and reliable overheating registration was possible in less than 10 seconds.

### Example 5.

### Multiple response of the system.

Testing procedure. The article made of the polymeric composite material with the weight of 1.5 g and 1.25 mm thickness, manufactured according to Example 1, was glued to a heating plate under normal conditions. The plate was placed in the geometric center of the cabinet with a volume of 1 m³ (the height of the cabinet was 2.0 m, the width was 1.0 m and the depth was 0.5 m). The temperature of the plate was controlled by a thermocouple fixed between the product of the composite polymeric material and the heating plate. The concentration of the signal gas released by the composite polymeric material was registered with a semiconductor gas sensor SP-42A-00 (manufactured by FIS Inc.) located at the distance of 1 cm from the geometric center of the upper edge of the cabinet. Heating of the plate was carried out smoothly three times in succession to different temperatures and stopped when the heating plate reached the temperature of 120 °C (with the first heating), 130 °C (for the second heating), 140 °C (with the third heating), After a while after that, the cabinet door was opened and the cabinet was ventilated. When the plate temperature decreased to about 39 ° C, the cabinet door was closed and the plate heating was resumed. This procedure was repeated three times. The heating was turned off at 36, 122 and 203 minutes, and the reverse switching on - at 83 and 167 minutes. The cabinet was ventilated at 49, 133 and 215 minutes.

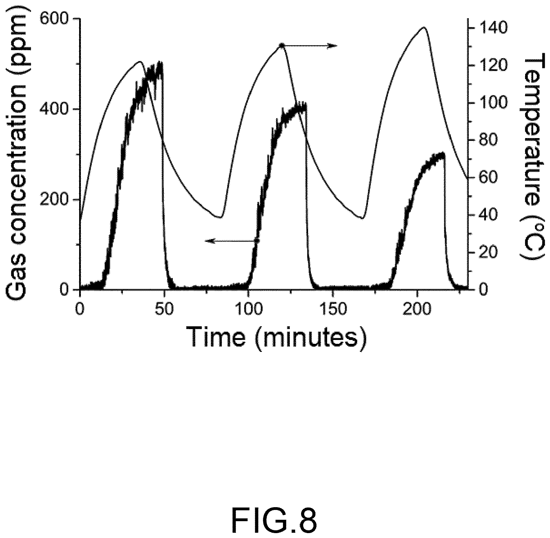

Fig. 8 shows that in this experiment the system responded at least three times (each time heating is turned on). Despite the fact that with each new response the amount of gas emission decreased, its concentration ensured reliable overheating registration all the times.

Thus, the proposed system provides a quick response and a reliable detection of overheating when the temperature rises to about 100oX, including repeated system response.

### Information sources:

1. Electronics: Science, Technology, Business. Issue 4/2001, p. 48.
   Author's certificate of the USSR 1277159, IPC G08B17 / 10, 1985.
   Patent of the Russian Federation No. 2022250, IPC G01N21 / 61, 1994.
4. The patent of the Russian Federation 2175779, IPC G08B17 / 117, 2001.
5. The patent of the Russian Federation 95849, IPC G01N33 / 00, 2010.
6. Patent document JP 6-66648, 1994.
7. A.P.Dolin, A.I. Karapuzikov, Yu.A. Kovalkova, "Efficiency of using a laser leak detector "KARAT" to determine the location and level of development of electrical equipment malfunction", Electro, Nº 6. PP. 25-28 (2009).
8. The patent of the Russian Federation 2403934, IPC A62D1 / 00, 2010.

## Claims

1. The pre-fire situations alarm system for fires arising from local overheating of electrical equipment, including a gas sensor connected to a recorder that is connected to a signal delivery system and a polymeric composite material applied to heat-prone areas of an electrical circuit comprising a continuous phase that is formed by a thermosetting polymer, and a light boiling substance within specified continuous phase, and having an opening temperature in the range of 80-200 ° C.

2. The pre-fire situation alarm system according to claim 1, differing by the fact that the system is designed for multiple response when heating of the specified polymeric composite material in repeated heating cycles to a temperature in the explosive destruction temperature range and the further cooling to lower temperatures below burst temperature range.

3. The pre-fire situations alarm system according to claim 1 or 2, differing by the fact that the light-boiling substance contained within the thermosetting polymeric composite material comprises halogen hydrocarbons.

4. The pre-fire situations alarm system according to claim 3, differing by the fact that the composition of the light boiling substance includes 1,1,1,3,3-pentafluorobutane (Chladon 365), 1,1,1,2,2,4,5,5 , 5-nonafluoro-4- (trifluoromethyl) pentan-3-one (Novec 1230), 1,1,1,2,3,3,3 heptafluoropropane or octafluorocyclobutane.

5. The system for pre-fire situations alarm according to claim 1 or 2, differing by the fact that the composition of the light boiling substance contained within the polymeric composite material includes odorants selected from the group consisting of methyl mercaptan, ethyl mercaptan, n-propyl mercaptan, isopropyl mercaptan, n-butyl mercaptan, sec-butyl mercaptan, isobutyl mercaptan, tert-butyl mercaptan, amyl mercaptan, isoamyl mercaptan, hexyl mercaptan, dimethyl sulfide, diethyl sulfide, diallyl disulfide, allyl methyl sulfide, methylethylsulfide, diisopropyl sulfide, dimethyldisulfide, diethyl disulfide, dipyridyl disulfide, diizopropildisulfid or solutions thereof.

6. The system for pre-fire situations alarm according to claim 5, differing by the fact that the solvent in odorant solutions includes hydrofluorocarbons, hydrofluorocarbons, fluorocarbons, chlorocarbons, chlorofluorocarbons, alkanes, ethers, or any mixtures thereof.

7. The system for pre-fire situations alarm according to claims 1-6, differing by the fact that the polymeric composite material is a microcapsule with a core of a light boiling substance enclosed in a binder, wherein the microcapsules have a two-layer crosslinked polymeric shell whose inner layer consists of gelatin or its derivative, and the outer reinforcing layer consists of carbamide resins, resorcinol resins, melamine resins, phenolic resins or polyvinyl acetate resins.

8. The pre-fire situations alarm system according to claim 1 or 2, differing by the fact that the average outer diameter of the microcapsules is 1-5000 microns and the average thickness of the polymeric shell is 0.01-1 micron.

9. The system for pre-fire situations alarm according to claim 1 or 2, differing by the fact that the polymeric binder is an acrylic resin and / or an epoxy resin and / or polyamide and / or polyvinyl acetate and / or polyester and / or polyurea and / or polyvinyl alcohol, and / or polyurethane.

10. The system for pre-fire situations alarm according to claims 1- 6, differing by the fact that the polymeric composite material is a polymer gel formed by crosslinked polymer particles swollen in a solution of a light boiling substance placed in a polymeric matrix formed by a thermosetting polymer.

11. The system for pre-fire situations alarm according to claim 10, differing by the fact that the thermosetting polymer is polyacrylamide, crosslinked with N, N'-methylenebisacrylamide, polyvinyl alcohol crosslinked with epichlorohydrin or polyvinyl alcohol crosslinked with glutaraldehyde.

12. The system for pre-fire situations alarm according to claim 10, differing by the fact that the average particle size is 50-500 µm.

13. The system for pre-fire situations alarm according to claim 11, differing by the fact that the average particle size is 50-500 µm.

14. The system for pre-fire situations alarm according to claim 10, differing by the fact that the polymeric matrix is polyorganosiloxane, polyvinyl acetate, epoxy resin.

15. The system for pre-fire situations alarm according to claims 11-13, differing by the fact that the polymeric matrix is polyorganosiloxane, polyvinyl acetate, epoxy resin.

16. The system for pre-fire situations alarm according to claims 1-6, differing by the fact that the polymeric composite material is a silica gel or zeolite particle with a light-boiled substance sorbed thereon, placed in a polymeric matrix formed by a thermosetting polymer.

17. The system for pre-fire situations alarm according to claim 16, differing by the fact that the average particle size is 10-2000 µm.

18. The system for pre-fire situations alarm according to claim 16, differing by the fact that the polymeric matrix is polyurethane, polyurea.

19. The system for pre-fire situations alarm according to claim 17, differing by the fact that the polymeric matrix is polyurethane, polyurea.

20. The device for pre-fire situations alarm according to claims 1-6, differing by the fact that the polymeric composite material is porous polymer particles with closed-type pores or channels filled with an odorant or an odorant solution placed in a polymeric matrix formed by the thermosetting polymer.

21. The system for pre-fire situations alarm according to claim 20, differing by the fact that the average particle size is 200-5000 µm.

22. The system for pre-fire situations alarm according to claim 20, differing by the fact that the average particle size is 10-2000 µm.

23. The system for pre-fire situations alarm according to claim 21, differing by the fact that the average particle size is 10-100 µm.

24. The pre-fire situations alarm system according to claim 21, differing by the fact that polystyrene, polyorganosiloxane, polyurethane, polyurea are offered as a porous polymer.

25. The system for pre-fire situations alarm according to claims 21-23, differing by the fact that the polymeric matrix is polyorganosiloxane, polyvinyl acetate, epoxy resin.

26. The system for pre-fire situations alarm according to claim 20, differing by the fact that the polymeric matrix is polyorganosiloxane, polyvinyl acetate, epoxy resin.

27. The system for pre-fire situations alarm according to claims 21-24, differing by the fact that the polymeric matrix is polyorganosiloxane, polyvinyl acetate, epoxy resin.

28. The system for pre-fire situations alarm according to claim 25, differing by the fact that the polymeric matrix is polyorganosiloxane, polyvinyl acetate, epoxy resin.
